# EUROPEAN PATENT APPLICATION

(11) **EP 2 093 044 A2**
(43) Date of publication of application: **26.08.2009**
(21) Application number: 09152317.5
(22) Date of filing: 06.02.2009
(51) Int. Cl.: B29C 70/46, B63C 11/22

(54) **Regulator for breathing equipment, in particular underwater breathing equipment**

(30) Priority: 22.02.2008 IT GE20080012
(71) Applicant: MARES S.p.A., 16035 Rapallo GE (IT)
(72) Inventor: Garofalo, Giovanni, 16035 Rapallo (IT)
(74) Representative: Porsia, Attilio

(57) **Abstract**

Box body for the second stage of regulators for breathing equipment for underwater use characterised in that it comprises a material comprising random carbon fibres in an epoxy or vinyl ester resin matrix, the said material being placed in a mould heated to temperatures of the order 120 - 150°C and subjected to a pressure of the order of 150 - 200 bar for single mould moulding and up to 300 bar for two-mould moulding for a few minutes until it is completely hardened.

## Description

This invention relates to regulators for breathing equipment, and more particularly relates to the box bodies of the second stages of the said regulators.

Box bodies for the second stages for breathing equipment, in particular for breathing equipment for underwater use, are always made of metal, carbon-fibre- reinforced plastics material, glass reinforced plastics, or the like. Metal ones have good thermal conductivity, which is important, but are very heavy, especially when it is borne in mind that they have to be held in the mouth by the mouthpiece. Those of reinforced plastics or glass reinforced plastics have the disadvantage of being rough, and are therefore not very pleasant to touch and not very comfortable, having little resistance to scratching and abrasion and not being conductors of heat. In order to overcome this latter disadvantage it has been proposed, see Italian patent application No. 2004000058 filed on the 02/07/04 in the name of MARES S.p.A., that thermoducting thermoplastic polymers, in particular technical polymers having a polyamide or polycarbonate or PET or TPU matrix containing fillers of metal particles, or ceramic particles or graphite or carbon fibres dispersed in the polymer matrix, should be used for the manufacture of the box bodies of the said regulators.

This however does not eliminate the other disadvantages mentioned above relating to the use of thermoplastics materials.

According to the present invention it has been discovered in a wholly surprising way that using a random carbon fibre composite in a matrix of epoxy resin of the type manufactured by Hexcel under the trade name HexMC or vinyl ester of the HUP type produced by POLYNT to manufacture these box bodies it is possible to obtain second stages of great lightness, great strength, almost equal to that of metals, excellent resistance to scratching and abrasion and excellent thermal conductivity using SMC (Sheet Moulding Compound) manufacturing processes.

Further objects and advantages of this invention will be more apparent in the course of the following description.

The starting material for moulding box bodies according to the invention comprises random carbon fibre in a matrix of epoxy or vinyl ester resin and is normally produced in the form of sheets having a weight of the order of 2000 - 2500 grams/square metre, with a density of 1.40 - 1.60 grams/cubic metre, with a fibre length of 25 to 50 millimetres, and a nominal fibre volume of approximately 50-60%.

During the moulding stage the starting material, which is placed in a mould heated to a temperature of the order of 120 to 150°C, is subjected to a pressure of the order of 150 - 220 bar for moulding with one mould, and up to 300 bar for moulding with two moulds, for a few minutes, after which the material hardened in this way is removed from the mould.

During the moulding process the material only undergoes a minimum amount of shrinkage, and the final piece has no internal stresses.

With this material it is possible to obtain boxes for the second stage of regulators which are extremely light, very strong, almost as strong as metals, with excellent resistance to scratching and abrasion and optimum thermal conductivity.

## Claims

1. Box body for the second stage of regulators for breathing equipment for underwater use **characterised in that** they comprise a material comprising random carbon fibres in an epoxy or vinyl ester resin matrix, the said material being placed in a mould heated to a temperature of the order of 120 - 150°C and subjected to a pressure of the order of 150 - 220 bar for single mould moulding and up to 300 bar for two-mould moulding, for a few minutes until it is completely hardened.

2. Box body according to Claim 1, **characterised in that** the starting material comprising random carbon fibres in a matrix of epoxy or vinyl ester resin is produced in the form of sheets having a weight of the order of 2000 - 2500 grams/square metre, with a density of 1.40 - 1.60 grams/cubic metre, with a fibre length of 25 to 50 millimetres and with a nominal fibre volume of approximately 50-60%.

3. Box body according to either of Claims 1 and/or 2 above, produced using a manufacturing process of the type known as SMC, or Sheet Moulding Compound.
